# EUROPÄISCHE PATENTANMELDUNG

(11) **EP 2 309 235 A1**
(43) Veröffentlichungstag der Anmeldung: **13.04.2011**
(21) Anmeldenummer: 09172769.3
(22) Anmeldetag: 12.10.2009
(51) Int. Cl.: G01F 23/296

(54) **Segmentbasierte Signalverarbeitung**

(71) Anmelder: VEGA Grieshaber KG, 77709 Wolfach (DE)
(72) Erfinder: Welle, Roland, 77709, Oberwolfach (DE)
(74) Vertreter: Maiwald, Walter

(57) **Zusammenfassung**

Gemäß einem Ausführungsbeispiel der Erfindung ist ein Elektronikmodul für ein Füllstandmessgerät angegeben, welches einen neu erfassten Datenpunkt auf Basis eines Erwartungstrichters bewertet und, falls dieser Datenpunkt innerhalb des Erwartungstrichters liegt, einen vorhergehenden Datenpunkt durch diesen neu erfassten Datenpunkt ersetzt. Andernfalls wird ein neuer Erwartungstrichter erzeugt. Hierdurch kann die Darstellung von Echosignalverläufen effizienter gestaltet werden.

## Beschreibung

### Gebiet der Erfindung

Die Erfindung betrifft das Gebiet der Füllstand-, Druck- und Durchflussmessung. Insbesondere betrifft die Erfindung ein Elektronikmodul für ein Füllstand-, Druck- oder Durchflussmessgerät, ein Füllstand-, Druck- oder Durchflussmessgerät mit einem solchen Elektronikmodul, ein Verfahren zur segmentbasierten Signalverarbeitung in der Füllstandmessung, der Druckmessung oder der Durchflussmessung, ein Programmelement und ein computerlesbares Medium.

### Technologischer Hintergrund

Bei heutigen Messverfahren zur Messung von Füllständen, Drücken oder zur Messung eines Durchflusses durch eine Leitung können die Messwerte, ggf. nach entsprechender Aufbereitung, in Form von sog. Tracklisten gespeichert werden.

Im Fall der Füllstandmessung, die beispielsweise auf dem sog. FMCW (Frequency Modulated Continuous Wave) Prinzip oder dem Puls-Laufzeitverfahren beruht, korrespondieren diese Tracklisten mit gemessenen Echokurven. Im Falle der Druckmessung können diese Tracklisten beispielsweise den zeitlichen Verlauf der gemessenen Drücke widerspiegeln und im Falle einer Durchflussmessung eine Durchflussrate zu bestimmten Zeitpunkten.

Die Tracklisten benötigen oft einen relativ großen Speicherplatz. Die Übertragung der Tracklisten vom Messgerät an eine externe Einheit ist nur möglich, wenn eine ausreichende Übertragungskapazität zur Verfügung steht.

US 7284425 B2 beschreibt ein Verfahren zur Füllstandbestimmung, bei dem zwischen sich bewegenden Oberflächen und stillstehenden Oberflächen unterschieden werden kann.

WO 2004/010093 A1 beschreibt ein Verfahren zur Bestimmung eines Erwartungsbereichs für zukünftige Echos, bei dem das zeitliche Verhalten von in der Vergangenheit liegenden Echodaten berücksichtigt wird.

DE 4234300 C2 beschreibt ein Messverfahren nach dem Puls-Laufzeit-Verfahren.

WO 2009/037000 A3 beschreibt ein Verfahren zum Auffinden und Extrahieren von Echos.

### Zusammenfassung der Erfindung

Es ist eine Aufgabe der Erfindung, eine effiziente Darstellung von Echosignalverläufen, Druckverläufen und/oder Durchflussänderungen zu ermöglichen.

Diese Aufgabe wird durch die Merkmale der unabhängigen Patentansprüche gelöst. Weiterbildungen der Erfindung ergeben sich aus den Unteransprüchen.

Gemäß einem Ausführungsbeispiel der Erfindung ist ein Elektronikmodul für ein Füllstandmessgerät, für ein Druckmessgerät und/oder ein Durchflussmessgerät angegeben, welches eine segmentbasierte Signalverarbeitung durchführen kann. Das Elektronikmodul weist eine Speichereinheit zur Speicherung einer zeitlichen Abfolge von Datenpunkten, die mit den von dem Messgerät erfassten Messwerten korrespondieren, auf. Weiterhin ist eine Recheneinheit zum gezielten Löschen einzelner Datenpunkte aus dem Speicher vorgesehen, wobei die Recheneinheit weiterhin zum Berechnen einer Darstellung eines zeitlichen Verlaufs des Füllstands, des Drucks und/oder des Durchflusses auf Basis der nach dem gezielten Löschen im Speicher verbliebenen Datenpunkte ausgeführt ist. Nach jedem neuen Messzyklus des Messgeräts wird (beispielsweise von der Recheneinheit) entschieden, ob ein zuletzt gespeicherter Datenpunkt durch einen neuen in dem neuen Messzyklus erzeugten Datenpunkt ersetzt werden soll (oder nicht).

Auf diese Weise ist es möglich, den Speicherbedarf unter bestimmten, im Folgenden näher erläuterten Umständen konstant zu halten, da jeweils der zuletzt gespeicherte Messwert durch den neuen Messwert ersetzt wird.

Gemäß einem weiteren Ausführungsbeispiel der Erfindung erfolgt die Darstellung des zeitlichen Verlaufs des Füllstands, des Drucks oder des Durchflusses durch eine Aneinanderreihung von Geradenabschnitten oder anderen Kurvenabschnitten, wie beispielsweise Polynomfunktionen. Die Geradenabschnitte bzw. Kurvenabschnitte werden hierbei jeweils über zwei im Speicher gespeicherte Datenpunkte charakterisiert. Bei diesen beiden Datenpunkten handelt es sich beispielsweise um den ersten Messwert und den letzten Messwert, der ja den vorhergehenden Messwert ersetzt hat.

Gemäß einem weiteren Ausführungsbeispiel der Erfindung korrespondiert jeder Datenpunkt mit einem gemessenen Echo. In anderen Worten handelt es sich bei dem Elektronikmodul um ein Elektronikmodul, das für die Füllstandmessung nach dem FMCW-Prinzip oder dem Puls-Laufzeitverfahren eingesetzt werden kann.

Gemäß einem weiteren Ausführungsbeispiel der Erfindung weist die zeitliche Abfolge der Datenpunkte einen oder mehrere Tracks auf, die als Tracklisten gespeichert sind.

Gemäß einem weiteren Ausführungsbeispiel der Erfindung handelt es sich bei dem Messgerät um ein Füllstandmessgerät, das nach dem Puls-Laufzeitverfahren oder dem FMCW-Verfahren arbeitet, wobei das Elektronikmodul zur Identifikation eines Füllstandechos ausgeführt ist.

Gemäß einem weiteren Ausführungsbeispiel der Erfindung ist die Recheneinheit zur Berechnung eines Erwartungstrichters von miteinander korrespondierenden Datenpunkten der zeitlichen Abfolge von Datenpunkten ausgeführt, wobei, falls ein durch eine Messung neu erzeugter Datenpunkt eines neu erfassten Echos innerhalb des Erwartungstrichters liegt, dieser Datenpunkt gespeichert wird und dabei gleichzeitig einen früheren Datenpunkt ersetzt.

Beispielsweise wird also nach jedem Messzyklus bestimmt, ob der neue Datenpunkt (also beispielsweise der gemessene Füllstand zu einer entsprechenden Zeit) in dem entsprechenden Erwartungstrichter liegt, oder nicht. Ist dies der Fall, ersetzt dieser neue Datenpunkt den vorhergehenden.

Gemäß einem weiteren Ausführungsbeispiel der Erfindung wird ein durch eine Messung neu erzeugter Datenpunkt eines neu erfassten Echos gespeichert, falls dieser Datenpunkt außerhalb des Erwartungsbereichs liegt. Hierbei ersetzt er allerdings nicht gleichzeitig einen früheren Datenpunkt.

Gemäß einem weiteren Ausführungsbeispiel der Erfindung ist die Recheneinheit zur Berechnung eines weiteren Erwartungstrichters mit Hilfe des neu erzeugten und gespeicherten Datenpunkts ausgeführt.

Wenn sich also herausstellt, dass der in dem neuen Messzyklus erzeugte Datenpunkt außerhalb des Erwartungstrichters liegt, wird dieser Datenpunkt zusätzlich in den Speicher (also beispielsweise in die entsprechende Trackliste) aufgenommen und es kann ein neuer Erwartungstrichter erzeugt werden. Dies führt dazu, dass sich der Trend der resultierenden Messkurve ändert und dass, falls die Messkurve durch Geradenabschnitte dargestellt wird, ein neuer Geradenabschnitt hinzugenommen wird, der eine andere Steigung als der vorherige Geradenabschnitt aufweist.

Gemäß einem weiteren Ausführungsbeispiel der Erfindung ist ein Messgerät angegeben, das beispielsweise zur Füllstandmessung, zur Druckmessung und/oder zur Durchflussmessung einsetzbar ist und ein oben und im Folgenden beschriebenes Elektronikmodul aufweist.

Gemäß einem weiteren Ausführungsbeispiel der Erfindung ist ein Verfahren zur segmentbasierten Signalverarbeitung in der Füllstandmessung, der Druckmessung und/oder der Durchflussmessung angegeben. Im Falle der Füllstandmessung handelt es sich beispielsweise um eine Echosignalverarbeitung. Bei dem Verfahren erfolgt ein Speichern einer zeitlichen Abfolge von Datenpunkten, die mit von dem Messgerät erfassten Messwerten korrespondieren. Nach jedem neuen Messzyklus des Messgeräts wird entschieden, ob ein zuletzt gespeicherter Datenpunkt durch einen in dem neuen Messzyklus erzeugten Datenpunkt ersetzt werden soll (und im Falle, dass dies passieren soll, auch tatsächlich ersetzt wird). Weiterhin erfolgt die Berechnung einer Darstellung eines zeitlichen Verlaufs des Füllstands, des Drucks und/oder des Durchflusses auf Basis der nach dem Ersetzen (oder andernfalls Hinzunehmen) des zuletzt gespeicherten Datenpunktes im Speicher gespeicherten Datenpunkte.

Gemäß einem weiteren Ausführungsbeispiel der Erfindung wird ein Erwartungstrichter von miteinander korrespondierenden Datenpunkten der zeitlichen Abfolge von Datenpunkten berechnet. Falls ein durch eine neue Messung neu erzeugter Datenpunkt eines neu erfassten Echos innerhalb des Erwartungstrichters liegt, wird dieser Datenpunkt gespeichert und ersetzt dabei gleichzeitig einen früheren Datenpunkt. Falls der durch die Neumessung neu erzeugte Datenpunkt des neu erfassten Echos außerhalb des Erwartungstrichters liegt, wird dieser Datenpunkt zusätzlich zu den bisher bestehenden Datenpunkten gespeichert (ersetzt also nicht gleichzeitig einen früheren Datenpunkt).

Gemäß einem weiteren Ausführungsbeispiel der Erfindung ist ein Programmelement angegeben, das, wenn es auf einem Prozessor eines Messgeräts ausgeführt wird, den Prozessor und damit das Messgerät anleitet, die oben und im Folgenden beschriebenen Schritte durchzuführen.

Gemäß einem weiteren Ausführungsbeispiel der Erfindung ist ein computerlesbares Medium angegeben, auf dem ein Programmelement gespeichert ist, das, wenn es auf einem Prozessor eines Messgeräts ausgeführt wird, den Prozessor und damit das Messgerät anleitet, die oben und im Folgenden beschriebenen Schritte durchzuführen.

Die beschriebenen Ausführungsbeispiele betreffen gleichermaßen das Elektronikmodul, das Messgerät, das Verfahren, das Programmelement und das computerlesbare Medium. In anderen Worten lassen sich die oben und im Folgenden beispielsweise im Hinblick auf das Elektronikmodul beschriebenen Merkmale auch als Verfahrensschritte implementieren, und umgekehrt.

Im Folgenden werden mit Verweis auf die Figuren Ausführungsbeispiele der Erfindung beschrieben.

### Kurze Beschreibung der Figuren

Fig. 1 zeigt die prinzipielle Vorgehensweise bei der Echosignalverarbeitung.
Fig. 2 zeigt ein Füllstandmessgerät, ein Druckmessgerät und ein Durchflussmessgerät gemäß einem Ausführungsbeispiel der Erfindung.
Fig. 3 zeigt eine Echoliste.
Fig. 4 zeigt die Wiederholung von Messzyklen.
Fig. 5 zeigt zwei Tracks innerhalb einer Trackliste.
Fig. 6 zeigt Abläufe zur Ausführung eines ersten Teils eines Verfahrens gemäß einem Ausführungsbeispiel der Erfindung.
Fig. 7 zeigt Abläufe eines zweiten Teils eines Verfahrens gemäß diesem Ausführungsbeispiel der Erfindung.
Fig. 8 zeigt ein Ablaufdiagramm gemäß einem Ausführungsbeispiel der Erfindung.
Fig. 9 zeigt ein Ablaufdiagramm zur Initialisierung eines Erwartungstrichters.
Fig. 10 zeigt ein Ablaufdiagramm zur Aktualisierung eines Erwartungstrichters.
Fig. 11 zeigt eine Gegenüberstellung der Ergebnisse eines ersten Verfahrens und des Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

Die vorliegende Erfindung bezieht sich auf Verfahren und Vorrichtungen zur Messung von Füllständen, Drücken oder Durchflüssen aller Art. Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet der Sensor die vom Füllgut und den Behältereinbauten reflektierten Echosignale auf, und leitet daraus den jeweiligen Füllstand ab.

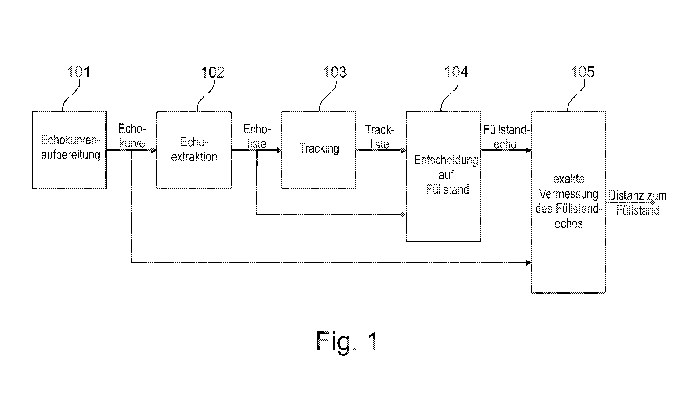

Figur 1 zeigt den grundsätzlichen Ablauf der Echosignalverarbeitung innerhalb eines kommerziellen Füllstandmessgerätes.

Im Block "Echokurvenaufbereitung" 101 sind alle Hard- und Softwareeinheiten enthalten, die benötigt werden, um eine Echokurve als Abbild der aktuellen Reflexionsverhältnisse innerhalb eines Behälters bereitzustellen. Die Echokurve wird vorzugsweise in digitaler Form innerhalb eines Mikroprozessorsystems erfasst, und mit Hilfe bekannter Verfahren auf darin enthaltene Echos untersucht.

Die innerhalb des Blocks "Echoextraktion" 102 zu diesem Zweck angewendeten Verfahren umfassen insbesondere Verfahren aus dem Bereich der schwellwertbasierenden Echoextraktion oder auch Verfahren auf Basis einer skalenbasierenden Echoextraktion. Nach Abarbeitung des Echoextraktionsverfahrens wird eine digitale Echoliste bereitgestellt, die vorzugsweise Angaben zu Anfang, Ort und Ende eines oder mehrerer in der Echokurve enthaltenen Echos beinhaltet.

Um die Zuverlässigkeit der Echosignalverarbeitung eines Füllstandmessgerätes weiter zu erhöhen, werden die gefundenen Echos innerhalb des Blocks "Tracking" 103 in einen historischen Kontext gestellt. Die dabei verwendeten Verfahren entstammen dem aktuellen Stand der Technik. So können beispielsweise Verfahren auf Basis des Munkres Algorithmus vorteilhaft eingesetzt werden. Innerhalb des Tracking wird insbesondere der Verlauf des Ortes eines Echos über mehrere Einzelmessungen hinweg verfolgt, und diese gesammelte Information in Form eines Tracks im Speicher repräsentiert. Die gesammelten Historieninformationen mehrerer Echos werden in Form einer Trackliste nach außen hin bereitgestellt.

Im Block "Entscheidung auf Füllstand" 104 werden die Daten der aktuellen Echoliste und die Informationen über den zeitlichen Verlauf einzelner Echos miteinander abgeglichen, um nach bekannten Verfahren eine Identifikation des zum Füllstand gehörenden Echos zu ermöglichen.

Um die Genauigkeit der Füllstandmessung weiter zu verbessern, kann die Position des bestimmten Füllstandechos durch den optionalen Block "exakte Vermessung des Füllstandechos" 105 unter Anwendung rechenzeitintensiver Verfahren, beispielsweise Interpolationsverfahren, mit hoher Genauigkeit bestimmt werden. Die bestimmte Distanz zum Füllgut wird nach außen hin bereitgestellt. Die Bereitstellung kann in analoger Form (z.B. über eine 4..20 mA Schnittstelle) oder auch in digitaler Form (z.B. über einen Feldbus) realisiert werden.

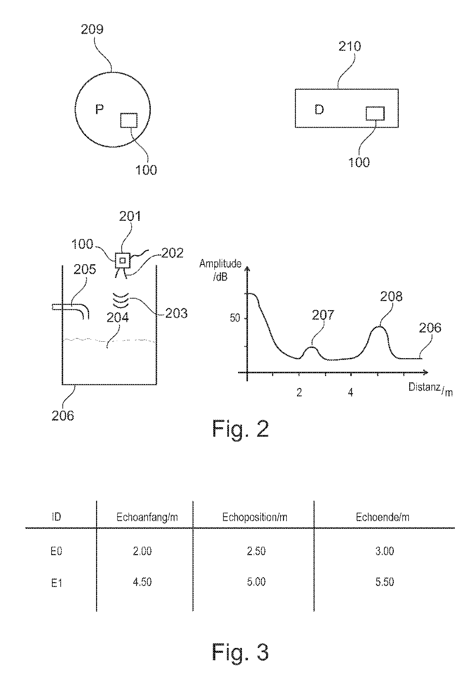

Die Vorteile der vorliegenden Erfindung ergeben sich aus den speziellen Randbedingungen, denen die Echosignalverarbeitung innerhalb eines kommerziellen Füllstandmessgerätes unterliegt. Fig. 2 zeigt eine typische Anwendung eines Füllstandmessgerätes 201 mit einem Elektronikmodul 100 gemäß einem Ausführungsbeispiel der Erfindung. Weiterhin sind ein Druckmessgerät 209 mit einem Elektronikmodul 100 und ein Durchflussmessgerät 210 mit einem Elektronikmodul gezeigt.

Das Füllstandmessgerät 201 strahlt über die Antenne 202 ein Signal 203 in Richtung des zu vermessenden Mediums 204 ab. Das Füllstandmessgerät selbst kann nach dem Ultraschallprinzip, dem Radarprinzip, dem Laserprinzip oder dem Prinzip der geführten Mikrowelle die Distanz zum Medium ermitteln.

Als Signale kommen dementsprechend sowohl Ultraschallwellen als auch elektromagnetische Wellen in Betracht. Das Medium 204 reflektiert die auftreffende Welle zurück zum Messgerät, wo diese empfangen und verarbeitet wird. Gleichzeitig wird das abgestrahlte Signal auch von Behältereinbauten, beispielsweise einem Zuflussrohr 205 reflektiert. Die im Füllstandmessgerät 201 empfangene Echokurve 206 kann somit neben dem vom Füllstand hervorgerufenen Nutzecho 208 auch Echos von fest eingebauten Störstellen 207 enthalten, welche nachfolgend als Störecho bezeichnet werden.

Innerhalb der nun anlaufenden Signalverarbeitung wird die Echokurve gezielt auf Echos hin untersucht 102.

Als Ergebnis der Echoextraktion wird eine Echoliste nach dem Schema der Fig. 3 erzeugt. Die Echoliste beinhaltet neben den charakteristischen Kennwerten des vom Zuflussrohr erzeugten Störechos (E0, 207) auch das vom Medium (204) erzeugte Füllstandecho (E1, 208).

Selbstverständlich stellen die dargestellten Merkmale der Echoliste lediglich eine spezielle Implementierung einer Echoliste dar. In der Praxis sind auch Echolisten mit weiteren oder veränderten Merkmalen eines Echos gebräuchlich.

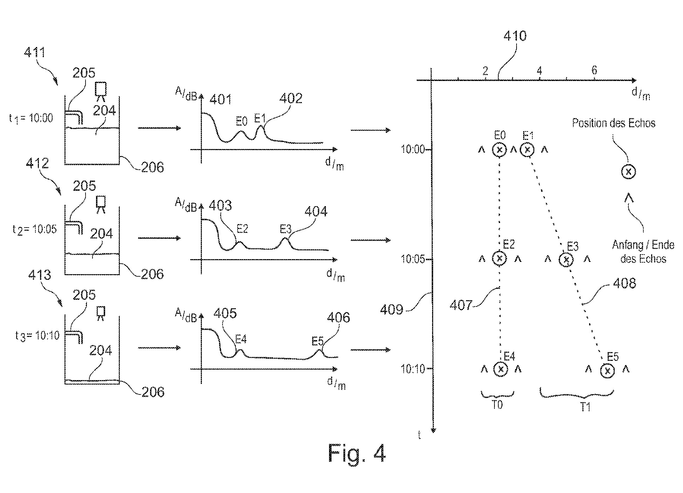

Werden in einem Füllstandmessgerät zyklische Messzyklen implementiert, so ergibt sich daraus eine Folge von empfangenen Echokurven, wie sie in Fig. 4 dargestellt wird. Beispielhaft sind drei unabhängige Messzyklen 411, 412, 413 im zeitlichen Abstand von jeweils fünf Minuten dargestellt. Selbstverständlich sind aber auch deutlich schnellere Messzyklen, beispielsweise im Abstand von einer Sekunde, realisierbar.

Das dargestellte Szenario zeigt die Verhältnisse beim Entleeren eines Behälters 206. Um den Verlauf der einzelnen Echos über mehrere solcher Messzyklen hinweg verfolgen zu können, kommen spezialisierte Algorithmen zum Einsatz, welche unter dem Begriff "Tracking" bekannt sind. Im vorliegenden Beispiel wird der Verlauf der von der Störstelle 205 verursachten Echos 401 (E0), 403 (E2) und 405 (E4) durch einen gemeinsamen Track 407 (T0) beschrieben. Dementsprechend wird der Verlauf der vom Medium 204 erzeugten Echos 402 (E1), 404 (E3) und 406 (E5) durch einen gemeinsamen Track 408 (T1) dargestellt. Die Darstellung des Verlaufes von Echos, welche eine gemeinsame Reflexionsstelle als Ursache haben, in Form eines Tracks ist in der Literatur beschrieben, und wird auch in anderen Bereichen, beispielsweise der Luftraumüberwachung, nutzbringend angewendet.

Die Hochachse 410 stellt den Abstand zur Füllgutoberfläche bzw. zur Störstelle in Metern dar und die Längsachse 409 stellt die Zeit, zu der der jeweilige Messzyklus erfolgt, dar.

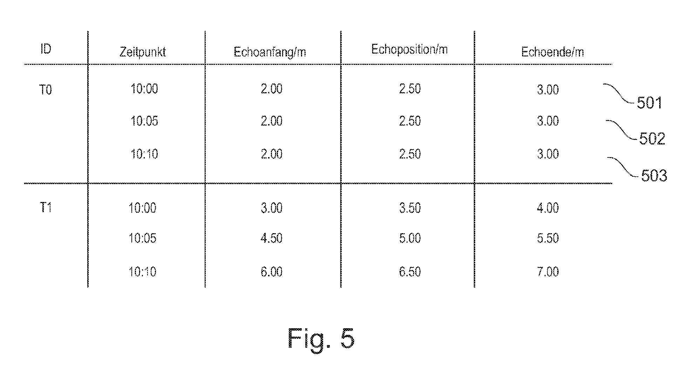

Nach Abschluss des Tracking 103 werden die gefundenen Tracks in Form einer Trackliste bereitgestellt. Fig. 5 zeigt beispielhaft eine Trackliste, wie sie sich aus der obigen Folge von Echokurven ergeben würde. Es sei wiederum darauf hingewiesen, dass die dargestellten Parameter der Trackliste eine vorteilhafte Auswahl möglicher charakteristischer Merkmale der zu Grunde liegenden Echos darstellt. Selbstverständlich können auch zusätzliche oder veränderte Merkmale innerhalb einer solchen Trackliste verfolgt werden.

Es wird anhand der dargestellten Trackliste sofort ersichtlich, dass mit jedem neu durchgeführten Messzyklus zumindest ein Satz neuer Echodaten in die bereits bestehende Trackliste eingefügt werden muss. Da innerhalb eines kommerziellen Füllstandmessgerätes sowohl Speicher als auch Rechenzeit begrenzte Ressourcen sind, stellt diese unkomprimierte Darstellung von Verläufen einzelner Echos innerhalb eines Füllstandmessgerätes eine nicht zu vernachlässigende Speicherbelastung dar. In der Praxis lassen sich daher nur sehr kurze Zeitspannen mit Hilfe von Trackingalgorithmen überwachen. Zudem wird anhand der Tabelle aus Figur 5 deutlich, dass die verwendete Vorgehensweise wenig angepasst an die speziellen Erfordernisse innerhalb der Füllstandmessung ist. So werden beispielsweise für die Verfolgung von Störechos (E0, E2, E4) ebenso viele Speicherstellen benötigt wie für die Verfolgung von Füllstandechos, obwohl die Einträge der Störechos 501, 502, 503 aufgrund der typischen Stationarität nahezu keinerlei zusätzliche Informationen beinhalten.

Der Erfindung liegt somit unter anderem die Aufgabe zu Grunde, eine effiziente, speicheroptimierte Darstellung von Echosignalverläufen unter der Randbedingung begrenzter Speicher- und Rechenzeitressourcen innerhalb eines kommerziellen Füllstandmessgerätes zu realisieren.

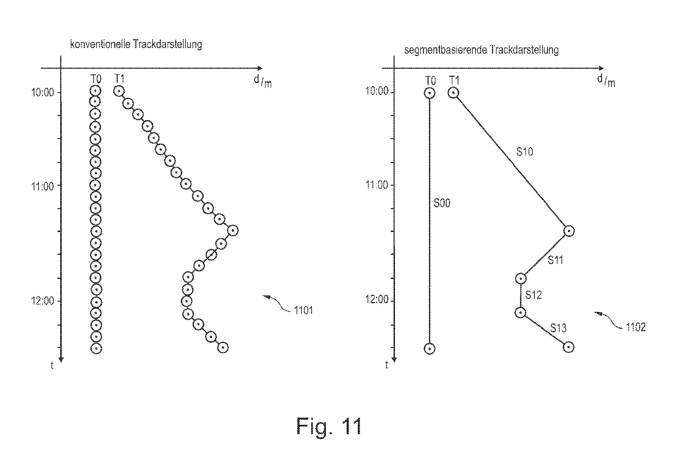

Fig. 11 stellt die grundlegende Idee des Verfahrens anschaulich dar. Während für die Darstellung 1101 von Tracks im Speicher eine Vielzahl einzelner Stützstellen für den Verlauf eines oder mehrerer Tracks benötigt werden, versucht das erfindungsgemäße Verfahren, ein deutlich reduziertes Abbild 1102 der Tracks im Speicher zu realisieren.

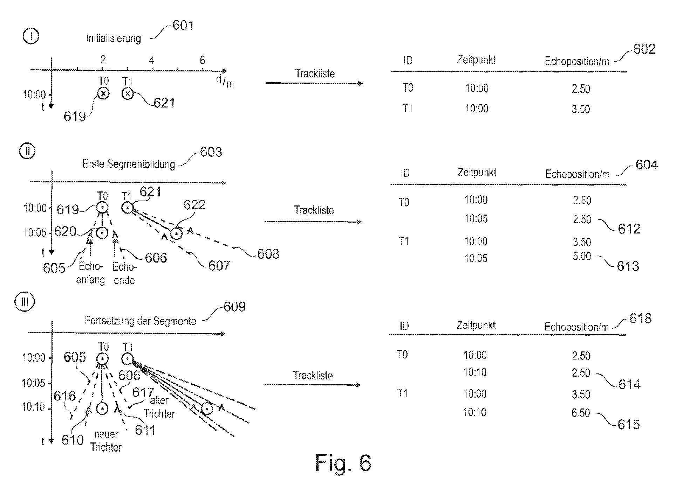

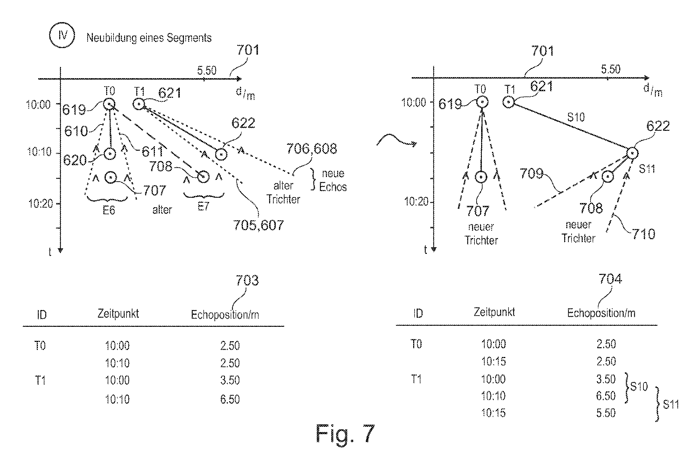

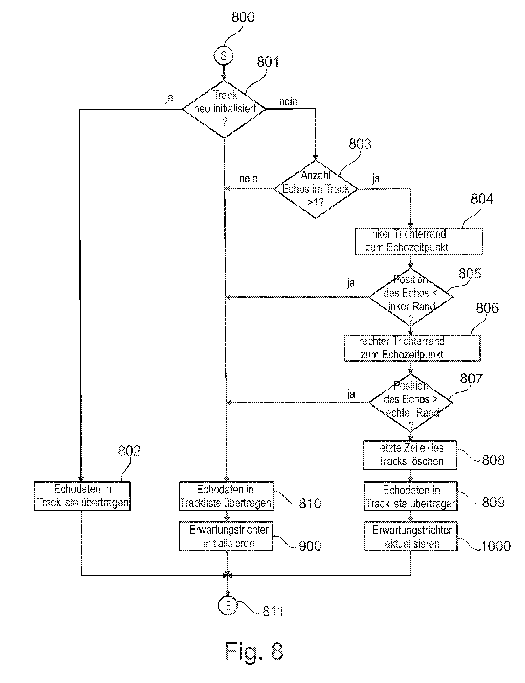

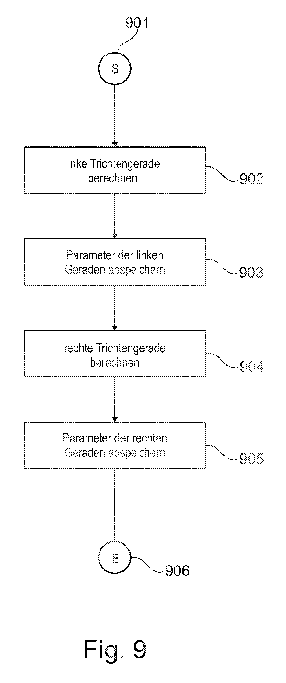

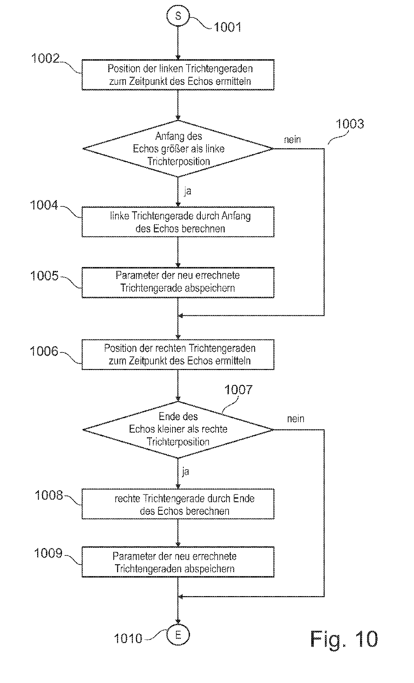

Dabei wird im vorliegenden Fall versucht, den Verlauf des Ortes eines Echos über mehrere Messungen hinweg durch eine Aneinanderreihung von Geraden, welche durch den jeweiligen Anfangs- und Endpunkt charakterisiert werden, zu beschreiben. Selbstverständlich können auch andere Kennwerte, beispielsweise die Amplitudenwerte der jeweiligen Echos, auf linearen Verlauf hin analysiert werden, um auf Basis dieser Analyse eine speichereffiziente Darstellung zu errechnen. Nachfolgend wird die Abarbeitung des erfindungsgemäßen Verfahrens anhand eines Beispiels (Fig. 6, Fig. 7) in Verbindung mit den Ablaufdiagrammen der Figuren 8 bis 10 detailliert erläutert.

Das Verfahren wird für jeden Track beim Initialisieren, d.h. der erstmaligen Übernahme der Daten eines Echos in einen neuen Track der Trackliste, sowie beim Anfügen neuer Echos an einen bereits bestehenden Track im Schritt 800 neu begonnen. Im Schritt 801 wird überprüft, ob der Track mit der Aufnahme der Daten des übergebenen Echos neu initialisiert wird. Ist dies der Fall, so werden die relevanten Daten des Echos im Schritt 802 direkt in die Trackliste übernommen.

Fig. 6 zeigt die praktische Durchführung der dargelegten Schritte. In Schritt 601 1 erfolgt die Initialisierung. Die beiden Echos 619 (E0) (207 in Fig. 2 bzw. 401 in Fig. 4) und 621 (E1) (208 in Fig. 2 bzw. 402 in Fig. 4) werden während des Trackings neu in die Trackliste 602 aufgenommen. Im vorliegenden Beispiel werden nur die Position und der Zeitpunkt des Auftretens des jeweiligen Echos innerhalb eines Tracks protokolliert.

Im nächsten Messzyklus 603 wird das Echo 403, 620 (E2) dem Track T0 und das Echo 404, 622 (E3) dem Track T1 zugewiesen. Da die Tracks bereits initialisiert sind, werden im Schritt 810 die Echodaten direkt in die Trackliste übernommen. Die erweiterte Trackliste 604 beinhaltet nun zwei Einträge je Track. Zudem werden im Schritt 900 die Begrenzungslinien 605, 606, 607, 608 der Erwartungstrichter neu initialisiert. Im Schritt 902 werden die Geradengleichungen der linken Trichtergeraden 605, 607 errechnet. Die linke Trichtergerade wird durch die Position des Anfangs des aktuellen Tracksegmentes und die Position des Anfangs des zuletzt angefügten Echos definiert.

Im Schritt 903 werden die Parameter der Geradengleichung (Steigung m, Offset b) der linken Trichtergeraden im Speicher des Sensors abgelegt. Im Schritt 904 werden die Geradengleichungen der rechten Trichtergeraden 606, 608 errechnet. Die rechte Trichtergerade eines Tracks ergibt sich aus der Position des Anfangs des aktuellen Tracksegmentes und der Position des Endes des zuletzt angefügten Echos. Die Parameter der rechten Trichtergeraden werden im ebenfalls im Speicher abgelegt 905.

Nach Auslösung eines erneuten Messzyklus 609 werden vom Echoextraktionsalgorithmus 102 die beiden Echos E4 (405) und E5 (406) identifiziert, wobei innerhalb des Tracking das Echo E4 dem Track T0 und das Echo E5 dem Track T1 zugewiesen werden soll.

Das Verfahren mündet in diesem Stadium in Schritt 804. Anhand der im Schritt 900 hinterlegten Parameter der linken Trichtergeraden 605 ist es nun möglich, die Position des linken Trichterrandes zum Zeitpunkt des Auftretens der Echos E4 (405) und E5 (406) zu bestimmen. Im Schritt 805 wird überprüft, ob die Position des neu anzufügenden Echos 405 kleiner als die berechnete Position 616 des linken Trichterrandes zum entsprechenden Zeitpunkt ist. Ist dies der Fall, so wird mit Schritt 810 fortgefahren, d.h. es wird ein neues Tracksegment begonnen. Ist dies nicht der Fall, so wird in den Schritten 806 und 807 untersucht, ob die Position des Echos größer ist als die Position 617 des berechneten rechten Trichterrandes zum Zeitpunkt des Auftretens des Echos ist.

Ist dies der Fall, so wird mit Schritt 810 fortgefahren, d.h. es wird ein neues Tracksegment begonnen.

Für den Fall, dass die Position des neu aufzunehmenden Echos innerhalb des Bereiches des verlängerten Trichters des jeweiligen Tracks liegt, wird im Schritt 808 die letzte Zeile 612 des jeweiligen Tracks gelöscht. In diesem Fall tritt gerade die erwartete lineare Fortsetzung des Verlaufes der Echoposition auf, wodurch die beabsichtigte komprimierte Darstellung mit dem begonnenen Tracksegment realisiert werden kann. Im Schritt 809 werden die Daten des anzufügenden Echos als neue Einträge in die Trackliste übernommen 614, 615. Im Schritt 1000 müssen nun noch die Begrenzungsgeraden 605, 606, 607, 608 der Erwartungstrichter aktualisiert werden.

Dazu wird im Schritt 1002 anhand der hinterlegten Parameter der linken Trichtergeraden 605 die Position 616 des linken Trichterrandes zum Zeitpunkt des Auftretens der Echos E4 (405) und E5 (406) berechnet. Ist die Position des Echoanfangs 610 größer als die Position 616 der linken Trichtergeraden zum Zeitpunkt des Echos, so werden die Parameter der linken Trichtergeraden neu berechnet, wobei sich die Gerade durch den Anfangspunkt des aktuellen Tracksegmentes und den Echoanfang des zuletzt angefügten Echos definiert. Die bestimmten Parameter der Geraden werden im Speicher abgelegt. Die Begrenzungsgerade 607 wird in gleicher Weise unter Verwendung des Echos E5 (406) aktualisiert.

Im Schritt 1006 wird anhand der hinterlegten Parameter der rechten Trichtergeraden 606 die Position 617 des rechten Trichterrandes zum Zeitpunkt des Auftretens der Echos E4 (405) und E5 (406) berechnet. Ist die Position des Echoendes 611 kleiner als die Position 617 der rechten Trichtergeraden zum Zeitpunkt des Echos, so werden die Parameter der rechten Trichtergeraden neu berechnet, wobei sich die Gerade durch den Anfangspunkt des aktuellen Tracksegmentes und das Ende des zuletzt angefügten Echos definiert. Die bestimmten Parameter der Geraden werden im Speicher abgelegt.

Die Begrenzungsgerade 608 wird in gleicher Weise unter Verwendung des Echos E5 (406) aktualisiert.

Es sei an dieser Stelle vermerkt, dass die sich ergebende Trackliste 618 trotz

Aufnahme weiterer Echos nicht mehr Speicherplatz benötigt als die vorausgegangene Trackliste 604.

Fig. 7 verdeutlicht schließlich den Verfahrensablauf für den Fall, dass die lineare Fortsetzung eines begonnenen Tracksegmentes nicht möglich ist. Ausgangslage sind die Verhältnisse der Fig. 6, Bezugszeichen 609, bzw. Fig. 7, Bezugszeichen 701. Durch plötzlich auftretende Befüllung nimmt das Füllstandecho 708 (E7) eine Position bei 5.50 m ein. Eine lineare Fortsetzung des Tracks T1 wird damit unmöglich, was sich grafisch darin zeigt, dass die Position des Echos E7 außerhalb der Begrenzungen der auf den Zeitpunkt 10:15 verlängerten Begrenzungsgeraden 705, 706 liegt.

Das Verfahren gemäß Fig. 8 geht im Schritt 805 folglich über zu Schritt 810, was unmittelbar dazu führt, dass Segment S10 in 702 abgeschlossen wird, und ein neues Segment S 11 mit veränderten Richtungsparametern und insbesondere mit neuen Trichterbegrenzungsgeraden 709, 710 begonnen wird. Die Tracklisten 703 und 704 verdeutlichen die Neuanlage eines Tracksegmentes.

Der neue Datenpunkt 707 hingegen, der sich innerhalb des TO-Trichters, der durch die Begrenzungsgeraden 610, 611 definiert ist, befindet, ersetzt den vorherigen Datenpunkt 620.

Das Verfahren ermöglicht eine einfache Darstellung von Tracks innerhalb eines Füllstandmessgerätes, und bietet neben der sehr effizienten Darstellung von Störechos durch sehr lange Tracksegmente insbesondere auch Vorteile während der Zeiträume, in denen eine Anlage nicht aktiv in Betrieb ist, beispielsweise über das Wochenende. In diesen Zeiträumen führen die Stationaritätseigenschaften des Nutzechos aufgrund fehlender Befüllungs- und Entleerungsvorgänge ebenfalls zu einer sehr effizienten Darstellung der anfallenden Echodaten.

Das vorgestellte Verfahren basiert auf einer Überführung der Trackingdaten in eine Darstellung mit stückweise definierten Geraden. Es mag auch möglich sein, andere Funktionen zu verwenden, beispielsweise Polynome höherer Ordnung, um den Verlauf der Echos mathematisch kompakt darzustellen.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Elektronikmodul (100) für ein Füllstandmessgerät (201), ein Druckmessgerät (209) oder ein Durchflussmessgerät (210) zur segmentbasierten Signalverarbeitung, das Elektronikmodul (100) aufweisend:
eine Speichereinheit zur Speicherung einer zeitlichen Abfolge von Datenpunkten, die mit von dem Messgerät (201, 209, 210) erfassten Messwerten korrespondieren;
eine Recheneinheit zum gezielten Löschen einzelner Datenpunkte aus dem Speicher;
wobei die Recheneinheit weiterhin zum Berechnen einer Darstellung eines zeitlichen Verlaufs eines Füllstands, eines Drucks oder eines Durchflusses auf Basis der nach dem gezielten Löschen im Speicher verbliebenen Datenpunkte ausgeführt ist;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll.

2. Elektronikmodul (100) nach Anspruch 1,
wobei die Darstellung des zeitlichen Verlaufs des Füllstands, Drucks oder Durchflusses durch eine Aneinanderreihung von Geradenabschnitten erfolgt, die jeweils über zwei im Speicher verbliebenen Datenpunkte charakterisiert werden.

3. Elektronikmodul (100) nach einem der vorhergehenden Ansprüche,
wobei jeder Datenpunkt mit einem gemessenen Echo korrespondiert.

4. Elektronikmodul (100) nach einem der vorhergehenden Ansprüche,
wobei die zeitliche Abfolge der Datenpunkte einen oder mehrere Tracks aufweist, die als Tracklisten gespeichert sind.

5. Elektronikmodul (100) nach Anspruch 4,
wobei das Messgerät ein Füllstandmessgerät (201) ist und nach dem Puls-Laufzeitverfahren oder dem FMCW-Verfahren arbeitet;
wobei das Elektronikmodul (100) zur Identifikation eines Füllstandechos ausgeführt ist.

6. Elektronikmodul (100) nach einem der vorhergehenden Ansprüche,
wobei die Recheneinheit zur Berechnung eines Erwartungstrichters (610, 611) von miteinander korrespondierenden Datenpunkten (619, 620) der zeitlichen Abfolge von Datenpunkten ausgeführt ist;
wobei, falls ein durch eine Messung neu erzeugter Datenpunkt (707) eines neu erfassten Echos innerhalb des Erwartungstrichters liegt, dieser Datenpunkt gespeichert wird und dabei gleichzeitig einen früheren Datenpunkte (620) ersetzt.

7. Elektronikmodul (100) nach einem der vorhergehenden Ansprüche,
wobei die Recheneinheit zur Berechnung eines Erwartungstrichters (705, 706) von miteinander korrespondierenden Datenpunkten (621, 622) der zeitlichen Abfolge von Datenpunkten ausgeführt ist;
wobei, falls ein durch eine Messung neu erzeugter Datenpunkt (708) eines neu erfassten Echos außerhalb des Erwartungstrichters liegt, dieser Datenpunkt gespeichert wird, aber dabei nicht gleichzeitig einen früheren Datenpunkt (622) ersetzt.

8. Elektronikmodul (100) nach Anspruch 7,
wobei die Recheneinheit zur Berechnung eines weiteren Erwartungstrichters (709, 710) mit Hilfe des neu erzeugten und gespeicherten Datenpunkts (708) ausgeführt ist.

9. Messgerät zur Füllstandmessung, Druckmessung oder Durchflussmessung mit einem Elektronikmodul (100) nach einem der Ansprüche 1 bis 8.

10. Verfahren zur segmentbasierten Signalverarbeitung in der Füllstandmessung, der Druckmessung oder der Durchflussmessung, das Verfahren aufweisend die Schritte:
Speichern einer zeitlichen Abfolge von Datenpunkten, die mit von einem Messgerät (201, 209, 210) erfassten Messwerten korrespondieren;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll;
Berechnen einer Darstellung eines zeitlichen Verlaufs eines Füllstands, Drucks oder Durchflusses auf Basis der nach dem Ersetzen des zuletzt gespeicherten Datenpunktes im Speicher verbliebenen Datenpunkte.

11. Verfahren nach Anspruch 10, weiterhin aufweisend den Schritt:
Berechnen eines Erwartungstrichters (610, 611) von miteinander korrespondierenden Datenpunkten (619, 620) der zeitlichen Abfolge von Datenpunkten;
wobei, falls ein durch eine Messung neu erzeugter Datenpunkt (707) eines neu erfassten Echos innerhalb des Erwartungstrichters liegt, dieser Datenpunkt gespeichert wird und dabei gleichzeitig einen früheren Datenpunkte (620) ersetzt;
wobei, falls ein durch eine Messung neu erzeugter Datenpunkt (708) eines neu erfassten Echos außerhalb des Erwartungstrichters liegt, dieser Datenpunkt gespeichert wird, aber dabei nicht gleichzeitig einen früheren Datenpunkt ersetzt.

12. Programmelement, das, wenn es auf einem Prozessor ausgeführt wird, den Prozessor anleitet, die folgenden Schritte durchzuführen:
Speichern einer zeitlichen Abfolge von Datenpunkten, die mit von einem Messgerät (201, 209, 210) erfassten Messwerten korrespondieren;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll;
Berechnen einer Darstellung eines zeitlichen Verlaufs eines Füllstands, Drucks oder Durchflusses auf Basis der nach dem Ersetzen des zuletzt gespeicherten Datenpunktes im Speicher verbliebenen Datenpunkte.

13. Computerlesbares Medium, auf dem ein Programmelement gespeichert ist, das, wenn es auf einem Prozessor ausgeführt wird, den Prozessor anleitet, die folgenden Schritte durchzuführen:
Speichern einer zeitlichen Abfolge von Datenpunkten, die mit von einem Messgerät (201, 209, 210) erfassten Messwerten korrespondieren;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll;
Berechnen einer Darstellung eines zeitlichen Verlaufs eines Füllstands, Drucks oder Durchflusses auf Basis der nach dem Ersetzen des zuletzt gespeicherten Datenpunktes im Speicher verbliebenen Datenpunkte.

## Geänderte Patentansprüche

### Geänderte Patentansprüche gemäss Regel 137(2) EPÜ.

**1.** Elektronikmodul (100) für ein Füllstandmessgerät (201) zur segmentbasierten Signalverarbeitung, das Elektronikmodul (100) aufweisend:
eine Speichereinheit zur Speicherung einer zeitlichen Abfolge von Datenpunkten, die mit von dem Messgerät (201, 209, 210) erfassten Messwerten korrespondieren;
eine Recheneinheit zum gezielten Löschen einzelner Datenpunkte aus dem Speicher;
wobei die Recheneinheit weiterhin zum Berechnen einer Darstellung eines zeitlichen Verlaufs eines Füllstands auf Basis der nach dem gezielten Löschen im Speicher verbliebenen Datenpunkte ausgeführt ist;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll oder nicht.

**2.** Elektronikmodul (100) nach Anspruch 1,
wobei die Darstellung des zeitlichen Verlaufs des Füllstands durch eine Aneinanderreihung von Geradenabschnitten erfolgt, die jeweils über zwei im Speicher verbliebenen Datenpunkte charakterisiert werden.

**3.** Elektronikmodul (100) nach einem der vorhergehenden Ansprüche,
wobei jeder Datenpunkt mit einem gemessenen Echo korrespondiert.

**4.** Elektronikmodul (100) nach einem der vorhergehenden Ansprüche,
wobei die zeitliche Abfolge der Datenpunkte einen oder mehrere Tracks aufweist, die als Tracklisten gespeichert sind.

**5.** Elektronikmodul (100) nach Anspruch 4,
wobei das Messgerät ein Füllstandmessgerät (201) ist und nach dem Puls-Laufzeitverfahren oder dem FMCW-Verfahren arbeitet;
wobei das Elektronikmodul (100) zur Identifikation eines Füllstandechos ausgeführt ist.

**6.** Elektronikmodul (100) nach einem der vorhergehenden Ansprüche,
wobei die Recheneinheit zur Berechnung eines Erwartungstrichters (610, 611) von miteinander korrespondierenden Datenpunkten (619, 620) der zeitlichen Abfolge von Datenpunkten ausgeführt ist;
wobei, falls ein durch eine Messung neu erzeugter Datenpunkt (707) eines neu erfassten Echos innerhalb des Erwartungstrichters liegt, dieser Datenpunkt gespeichert wird und dabei gleichzeitig einen früheren Datenpunkte (620) ersetzt.

**7.** Elektronikmodul (100) nach einem der vorhergehenden Ansprüche,
wobei die Recheneinheit zur Berechnung eines Erwartungstrichters (705, 706) von miteinander korrespondierenden Datenpunkten (621, 622) der zeitlichen Abfolge von Datenpunkten ausgeführt ist;
wobei, falls ein durch eine Messung neu erzeugter Datenpunkt (708) eines neu erfassten Echos außerhalb des Erwartungstrichters liegt, dieser Datenpunkt gespeichert wird, aber dabei nicht gleichzeitig einen früheren Datenpunkt (622) ersetzt.

**8.** Elektronikmodul (100) nach Anspruch 7,
wobei die Recheneinheit zur Berechnung eines weiteren Erwartungstrichters (709, 710) mit Hilfe des neu erzeugten und gespeicherten Datenpunkts (708) ausgeführt ist.

**9.** Messgerät zur Füllstandmessung, Druckmessung oder Durchflussmessung mit einem Elektronikmodul (100) nach einem der Ansprüche 1 bis 8.

**10.** Verfahren zur segmentbasierten Signalverarbeitung in der Füllstandmessung, das Verfahren aufweisend die Schritte:
Speichern einer zeitlichen Abfolge von Datenpunkten, die mit von einem Messgerät (201, 209, 210) erfassten Messwerten korrespondieren;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll oder nicht;
Berechnen einer Darstellung eines zeitlichen Verlaufs eines Füllstands auf Basis der nach dem Ersetzen des zuletzt gespeicherten Datenpunktes im Speicher verbliebenen Datenpunkte.

**11.** Verfahren nach Anspruch 10, weiterhin aufweisend den Schritt:
Berechnen eines Erwartungstrichters (610, 611) von miteinander korrespondierenden Datenpunkten (619, 620) der zeitlichen Abfolge von Datenpunkten;
wobei, falls ein durch eine Messung neu erzeugter Datenpunkt (707) eines neu erfassten Echos innerhalb des Erwartungstrichters liegt, dieser Datenpunkt gespeichert wird und dabei gleichzeitig einen früheren Datenpunkte (620) ersetzt;
wobei, falls ein durch eine Messung neu erzeugter Datenpunkt (708) eines neu erfassten Echos außerhalb des Erwartungstrichters liegt, dieser Datenpunkt gespeichert wird, aber dabei nicht gleichzeitig einen früheren Datenpunkt ersetzt.

**12.** Programmelement, das, wenn es auf einem Prozessor ausgeführt wird, den Prozessor anleitet, die folgenden Schritte durchzuführen:
Speichern einer zeitlichen Abfolge von Datenpunkten, die mit von einem Messgerät (201, 209, 210) erfassten Messwerten korrespondieren;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll oder nicht;
Berechnen einer Darstellung eines zeitlichen Verlaufs eines Füllstands, Drucks oder Durchflusses auf Basis der nach dem Ersetzen des zuletzt gespeicherten Datenpunktes im Speicher verbliebenen Datenpunkte.

**13.** Computerlesbares Medium, auf dem ein Programmelement gespeichert ist, das, wenn es auf einem Prozessor ausgeführt wird, den Prozessor anleitet, die folgenden Schritte durchzuführen:
Speichern einer zeitlichen Abfolge von Datenpunkten, die mit von einem Messgerät (201, 209, 210) erfassten Messwerten korrespondieren;
wobei nach jedem neuen Messzyklus des Messgeräts (201, 209, 210) entschieden wird, ob ein zuletzt gespeicherter Datenpunkt durch einen in dem neuen Messzyklus erzeugten Datenpunkt ersetzt werden soll oder nicht;
Berechnen einer Darstellung eines zeitlichen Verlaufs eines Füllstands, Drucks oder Durchflusses auf Basis der nach dem Ersetzen des zuletzt gespeicherten Datenpunktes im Speicher verbliebenen Datenpunkte.
